# FASCICULE DE BREVET EUROPEEN

(11) **EP 2 229 648 B1**
(45) Date de publication et mention de la délivrance du brevet: **28.08.2013**
(21) Numéro de dépôt: 09713901.8
(22) Date de dépôt: 08.01.2009
(51) Int. Cl.: G06F 21/55

(54) **METHODE DE TRANSFERT SECURISE DE DONNEES**
VERFAHREN ZUR SICHEREN DATENÜBERTRAGUNG
METHOD FOR SECURE DATA TRANSFER

(30) Priorité: 11.01.2008 FR 0800156
(43) Date de publication de la demande: 22.09.2010
(73) Titulaire: MORPHO, 92130 Issy Les Moulineaux (FR)
(72) Inventeur: DECROIX, David, F-93100 Montreuil (FR); ROUDIERE, Guillaume, F-92100 Boulogne Billancourt (FR); PEPIN, Cyrille, F-78570 Andresy (FR)
(74) Mandataire: Beaudouin-Lafon, Emmanuel
(86) Numéro de dépôt international: PCT/FR2009/000014
(87) Numéro de publication internationale: WO 2009/106757

(56) Documents cités:
- EP-A- 0 886 202
- EP-A- 1 772 811
- DE-A1- 19 925 389
- FR-A- 2 888 960
- HAGAI BAR-EL ET AL: "The Sorcerer's Apprentice Guide to Fault Attacks" INTERNET CITATION, [Online] XP002329915 Extrait de l'Internet: URL:http://web.archive.org/web/20041016071 838/eprint.iacr.org/2004/100> [extrait le 2005-05-27]

## Description

L'invention concerne la sécurisation du transfert de données entre plusieurs composants d'une carte à puce.

### ARRIERE PLAN DE L'INVENTION

La puce d'une carte à puce contient typiquement un processeur ou microcontrôleur ainsi que de la mémoire volatile telle que de la mémoire RAM, et de la mémoire non volatile telle que de la mémoire Flash, EEPROM ou encore ROM.

L'exécution d'une opération par un logiciel de la carte à puce nécessite de nombreux échanges de données depuis la mémoire non volatile vers la mémoire volatile de la puce. Ainsi, toute exploitation de données enregistrées en mémoire non volatile requiert un transfert vers la mémoire volatile.

C'est le cas lors de la lecture d'un fichier pouvant notamment contenir des données liées à un code secret afin de le comparer avec une valeur fournie en entrée, et lors de la lecture d'une clé pour effectuer un calcul cryptographique.

C'est également le cas lors de la lecture d'un tableau statique de constantes enregistré en mémoire ROM, contenant par exemple des données représentatives des droits d'accès aux fichiers enregistrés dans la carte.

Cette phase de transfert, qui est assurée par un bus de données de la puce, est sensible à des perturbations d'ordre électromagnétique. Il existe ainsi un procédé de fraude consistant à soumettre la carte à une source de rayonnement électromagnétique lors du transfert de données ce qui permet au fraudeur d'accéder à des données devant normalement lui rester cachées.

Ces perturbations provoquent par exemple une modification des données pendant le transfert, auquel cas, les données chargées dans la mémoire volatile diffèrent des données sources de la mémoire non volatile.

Cette sensibilité permet potentiellement de récupérer frauduleusement une clé ou un code secret de la carte, de contourner les droits d'accès aux fichiers contenus dans la carte, et/ou de modifier des paramètres de configuration de la carte.

C'est la raison pour laquelle des mesures sont prévues pour détecter ces modifications afin d'empêcher l'exécution d'une opération lorsqu'une telle modification a été détectée.

Une méthode consiste à vérifier après transfert que les données transférées sont identiques aux données sources. Ces données peuvent être une partie ou la totalité d'un élément, c'est à dire une partie ou la totalité des données constituant un ou plusieurs fichiers.

Concrètement, on vérifie après transfert que chaque octet de l'élément inscrit en mémoire volatile est identique à chaque octet de l'élément source, ce qui correspond à une opération de type lecture et vérification.

Cette méthode connue reste malgré tout inefficace vis-à-vis de certaines attaques. Si un attaquant sait perturber le transfert, pour modifier les données copiées en mémoire non volatile, et s'il sait reproduire cette même perturbation lors de l'opération de lecture et vérification, la modification ne peut être détectée.

En effet, dans ce cas, l'opération de lecture et vérification ne détecte pas d'anomalie puisqu'elle vérifie uniquement que les données perturbées lors de la copie l'ont également été lors de la lecture précédant la vérification.

Le document EP-1772811-A2 divulgue le transfert de données entre un hôte et une mémoire RAM d'une carte à puce, les données étant transférées via une mémoire tampon de cette carte à puce. Un contrôle d'intégrité des données transférées est réalisé au moyen d'un code de contrôle de type CRC.

Le document FR-2888960 divulgue une méthode de détection d'une faute par perturbation longue lors de la transmission de donnée depuis ou vers une carte à puce au moyen d'une somme de contrôle correspondante aux données transmises.

### OBJET DE L'INVENTION

Le but de l'invention est de proposer une solution pour remédier à ces inconvénients ci-dessus en proposant une méthode offrant un meilleur niveau de sécurisation du transfert de données entre les composants de la puce.

### RESUME DE L'INVENTION

A cet effet, l'invention a pour objet une méthode pour comparer des données sources enregistrées dans une mémoire source avec des données transférées copiées depuis la mémoire source dans une mémoire dite de destination, dans laquelle on lit dans la mémoire source une valeur d'intégrité associée à un élément source tel qu'un fichier contenant les données sources, dans laquelle on calcule l'intégrité d'un élément reconstitué correspondant à l'élément source, cet élément étant reconstitué à partir des données transférées complétées le cas échéant par les données de l'élément source autres que les données transférées, et dans laquelle on décide que les données transférées sont identiques aux données sources lorsque le calcul d'intégrité donne une valeur identique à la valeur d'intégrité de l'élément source.

Lors de la recopie, ce sont les données sources qui transitent par le bus de données, mais lors de la vérification, c'est la valeur d'intégrité qui transite par le bus de données. Les valeurs transitant par le bus ne sont donc pas les mêmes lors de la recopie et lors de la vérification, de sorte qu'une attaque consistant à appliquer au bus de données les mêmes perturbations durant la recopie et durant la vérification est complètement inefficace.

L'invention concerne également une méthode telle que définie ci-dessus, dans laquelle la valeur d'intégrité associée à l'élément contenant les données sources et la valeur d'intégrité calculée pour l'élément reconstitué sont des valeurs de contrôle cyclique de redondance des données.

L'invention concerne également une méthode telle que définie ci-dessus, dans laquelle on copie depuis la mémoire non volatile vers la mémoire volatile, une valeur de référence distincte des données à transférer, cette valeur de référence étant d'une part préenregistrée dans la mémoire non volatile et d'autre part préenregistrée dans un logiciel de lecture de la carte à puce, et dans laquelle on compare la valeur transférée en mémoire volatile avec la valeur enregistrée dans le logiciel de lecture pour déterminer si les données transférées sont identiques aux données sources.

L'invention concerne également une méthode telle que définie ci-dessus, dans laquelle la copie de la valeur prédéterminée est effectuée durant la copie des données sources.

### BREVE DESCRIPTION DES FIGURES

- La figure 1 est une représentation schématique d'un élément source enregistré dans une mémoire source non volatile ;
- La figure 2 est une représentation schématique du transfert d'une partie des données de l'élément source de la figure 1 vers une mémoire volatile.

### DESCRIPTION DETAILLEE DE L'INVENTION

L'idée à la base de l'invention est de procéder après transfert à un calcul d'intégrité des données transférées, de manière à détecter qu'une modification a eu lieu durant le transfert lorsque la valeur donnée par le calcul d'intégrité basé sur les données transférées ne correspond pas à la valeur d'intégrité associée aux données sources.

La méthode s'applique au cas du transfert d'une partie ou de la totalité des données d'un élément dont la valeur d'intégrité est enregistrée en mémoire source.

La valeur d'intégrité est par exemple une somme de contrôle des données de l'élément considéré qui est généralement un fichier. Cette valeur d'intégrité peut être une intégrité du type LRC c'est à dire "Longitudinal Redundancy Check" signifiant contrôle de parité croisé, ou bien une intégrité de type hash.

Cette valeur d'intégrité est avantageusement une valeur de CRC c'est à dire de contrôle cyclique de redondance qui est un test d'intégrité spécifiquement prévu pour la détection des erreurs de transmission de données. Il pourra s'agir d'une valeur de CRC16 correspondant à un contrôle cyclique de redondance sur 16 indicateurs binaires.

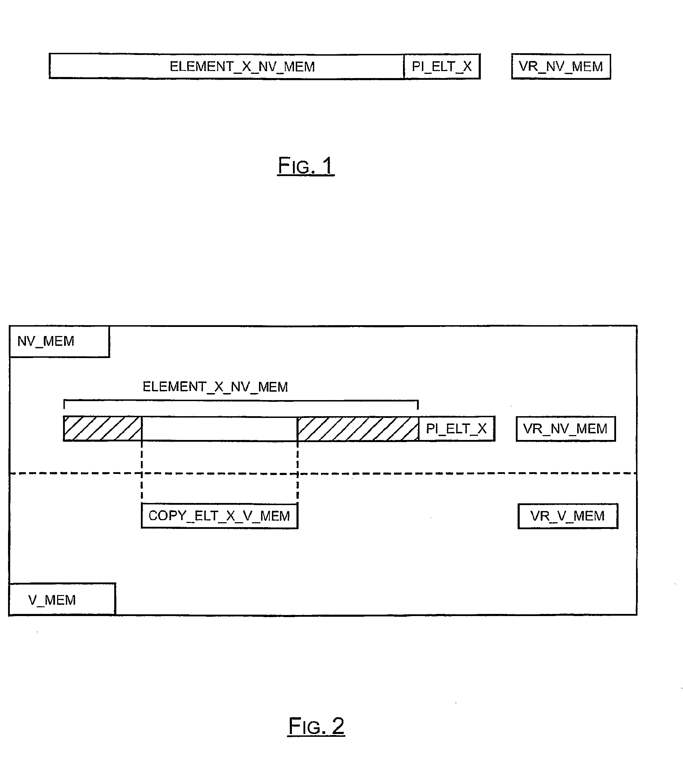

Dans l'exemple ci-après, la méthode comprend trois étapes pour transférer des données d'un élément source présent en mémoire non volatile, représenté schématiquement dans la figure 1 en y étant repéré par ELEMENT_X_NV_MEM, et pour vérifier que les données transférées sont identiques aux données sources.

La valeur d'intégrité PI_ELT_X de tout l'élément ELEMENT_X_NV_MEM a été préalablement enregistrée dans la mémoire non volatile, ceci ayant été effectué par exemple lorsque cet élément a été écrit dans la mémoire non volatile NV_MEM.

Comme représenté schématiquement en figure 2, une partie ou la totalité des données de cet élément source ELEMENT_X_NV_MEM sont d'abord copiées depuis la mémoire non volatile NV_MEM vers la mémoire volatile V_MEM. Les données inscrites dans la mémoire de destination, c'est à dire la mémoire volatile sont notées COPY_ELT_X_V_MEM.

Avantageusement, on effectue une vérification de la bonne recopie de ces données COPY_ELT_X_V_MEM, en comparant chaque octet recopié avec chaque octet correspondant dans l'élément source ELEMENT_X_NV_MEM, ce qui est une opération de lecture et de vérification.

Cette vérification peut être effectuée lorsqu'une partie des données ont été transférées pour stopper le transfert avant que toutes les données n'aient été inscrites en mémoire volatile.

Dans un dernier temps, on vérifie l'intégrité des données transférées. Si c'est la totalité des données de l'élément source ELEMENT_X_NV_MEM qui ont été inscrites en mémoire volatile, cette vérification consiste à calculer l'intégrité des données inscrites en mémoire volatile, et à comparer la valeur d'intégrité donnée par ce calcul avec la valeur d'intégrité PI_ELT_X inscrite dans la mémoire non volatile NV_MEM.

Si les données transférées COPY_ELT_X_V_MEM correspondent seulement à une partie des données constituant l'élément ELEMENT_X_NV_MEM, alors on calcule l'intégrité d'un élément reconstitué. Cet élément est reconstitué à partir des données transférées COPY_ELT_X_V_MEM complétées par les données non transférées de l'élément COPY_ELT_X_V_MEM, c'est à dire les parties hachurées sur la figure 2.

Cet élément reconstitué correspond à l'élément source ELEMENT_X_NV_MEM dont il comporte les données transférées COPY_ELT_X_V_MEM telles qu'inscrites en mémoire volatile V_MEM, et les données non transférées telles qu'inscrites dans la mémoire non volatile NV_MEM.

Lorsque le transfert de données s'est réalisé normalement, les données sources inscrites en mémoire non volatile NV_MEM sont identiques aux données transférées qui sont inscrites en mémoire volatile V_MEM.

Par conséquent, dans le cas normal, c'est à dire si les données transférées n'ont pas été modifiées, l'intégrité de l'élément reconstitué est identique à l'intégrité PI_ELT_X de l'élément source ELEMENT_X_NV_MEM inscrit en mémoire non volatile.

Au contraire, lorsque les données ont été modifiées pendant le transfert, c'est à dire pendant la recopie, le calcul de l'intégrité de l'élément reconstitué donne une valeur qui diffère de PI_ELT_X, ce qui permet donc de détecter cette anomalie ou modification.

Comme indiqué plus haut, l'étape de lecture et vérification est optionnelle dans la mesure où elle est inefficace vis-à-vis d'une perturbation appliquée au bus de transfert de manière identique lors de la recopie et lors de l'opération de lecture et vérification. Toutefois, cette étape permet de détecter au plus tôt une perturbation ponctuelle subie par le bus de données, pour arrêter le processus au plus tôt en cas d'anomalie.

La méthode selon l'invention permet ainsi de détecter une perturbation appliquée au bus de données : comme elle comporte une vérification par contrôle d'intégrité, les données transférées pour cette vérification, à savoir la valeur PI_ELT_X, ne sont pas les mêmes que les données transférées pour la recopie. Une attaque consistant à appliquer au bus les mêmes perturbations durant la recopie et durant la vérification est donc complètement inefficace.

Elle peut être encore complétée par une opération dite de fausse lecture effectuée durant la copie des données sources de la mémoire non volatile NV_MEM vers la mémoire volatile V_MEM. Dans ce cas, on prévoit une valeur de référence prédéterminée, notée VR_NV_MEM qui est préenregistrée dans la mémoire non volatile pour toute la vie de la carte, et qui est également intégrée au code du programme de lecture de la carte. Cette valeur correspond par exemple à un octet de données.

Avant d'effectuer la copie, on détermine aléatoirement un rang, noté i, pour la fausse lecture.

La copie est ensuite lancée, en commençant par les premiers octets des données sources ELEMENT_X_NV_MEM qui sont transférés les uns après les autres vers la mémoire volatile.

Mais le ième octet transféré est l'octet dit de fausse lecture, c'est à dire l'octet correspondant à la valeur de référence VR_NV_MEM. Une fois que cet octet a été transféré, la copie reprend son cours normal, en transférant successivement le ième octet des données sources ELEMENT_X_NV_MEM, puis les octets suivants.

Une fois que l'octet de fausse lecture a été inscrit en mémoire volatile VR_V_MEM, il peut être comparé à la valeur intégrée au programme de lecture de la carte, cette dernière étant nécessairement identique à VR_NV_MEM. Ceci permet de déterminer certaines perturbations intervenant durant le transfert.

Ce mécanisme additionnel permet une détection au plus tôt de certains types de perturbations qui seraient de toute façon détectées par le contrôle d'intégrité. Mais grâce à ce mécanisme, des perturbations peuvent être détectées avant la fin de la copie des données dans la mémoire volatile, ce qui est par conséquent plus sûr puisque le transfert peut alors être arrêté immédiatement, c'est à dire avant la fin de la copie des données dans la mémoire volatile.

Il faut encore noter que dans l'exemple décrit plus haut, l'étape optionnelle de lecture et de comparaison a lieu avant l'étape de contrôle d'intégrité des données transférées. Mais cette étape optionnelle peut aussi être mise en oeuvre après l'étape de contrôle d'intégrité, dans la mesure où elle peut, dans certains cas, détecter des erreurs non détectées par le contrôle d'intégrité.

L'invention apporte différents avantages puisqu'elle permet de contrer efficacement une attaque par perturbation du bus de données, et elle est peu coûteuse en temps d'exécution. Enfin elle ne nécessite pas de prévoir des données supplémentaires à enregistrer dans la ou les mémoires de la carte à puce.

## Revendications

1. Méthode pour comparer des données sources enregistrées dans une mémoire source (NV_MEM) d'une carte à puce avec des données transférées (COPY_ELT_X_V_MEM) copiées depuis la mémoire source (NV_MEM) dans une mémoire dite de destination (V_MEM) de cette carte à puce, dans laquelle on lit dans la mémoire source (NV_MEM) une valeur d'intégrité (PI_ELT_X) associée à un élément source (ELEMENT_X_NV_MEM) tel qu'un fichier contenant les données sources, **caractérisée en ce que** : on calcule l'intégrité d'un élément reconstitué correspondant à l'élément source (ELEMENT_X_NV_MEM), cet élément étant reconstitué à partir des données transférées (COPY_ELT_X_V_MEM) complétées le cas échéant par les données de l'élément source (ELEMENT_X_NV_MEM) autres que les données transférées si les données transférées (COPY_ELT_X_V_MEM) correspondent seulement à une partie des données constituant l'élément source (ELEMENT_X_NV_MEM), et **en ce qu'**on décide que les données transférées (COPY_ELT_X_V_MEM) sont identiques aux données sources lorsque le calcul d'intégrité donne une valeur identique à la valeur d'intégrité de l'élément source (PI_ELT_X).

2. Méthode selon la revendication 1, dans laquelle la valeur d'intégrité (PI_ELT_X) de l'élément contenant les données sources et la valeur d'intégrité calculée pour l'élément reconstitué sont des valeurs de contrôle cyclique de redondance des données.

3. Méthode selon la revendication 1 ou 2, dans laquelle on copie depuis la mémoire source (NV_MEM) vers la mémoire de destination (V_MEM), une valeur de référence (VR_NV_MEM) distincte des données à transférer, cette valeur de référence étant d'une part préenregistrée dans la mémoire source (NV_MEM) et d'autre part préenregistrée dans un logiciel de lecture de la carte à puce, et dans laquelle on compare la valeur transférée (VR_V_MEM) en mémoire de destination (V_MEM) avec la valeur enregistrée dans le logiciel de lecture pour déterminer si les données transférées (COPY_ELT_X_V_MEM) sont identiques aux données sources.

4. Méthode selon la revendication 3, dans laquelle la copie de la valeur prédéterminée est effectuée durant la copie des données sources.

## Patentansprüche

1. Verfahren zum Vergleichen von in einem Quellspeicher (NV_MEM) gespeicherten Quelldaten einer Chipkarte mit übertragenen Daten (COPY_ELT_X_V_MEM), die vom Quellspeicher (NV_MEM) in einen Speicher, der als Zielspeicher (V_MEM) dieser Chipkarte bezeichnet wird, kopiert werden, bei dem im Quellspeicher (NV_MEM) ein mit einem Quellelement (ELEMENT_X_NV_MEM) verknüpfter Integritätswert (PI_ELT_X), wie z. B. eine Datei, die die Quelldaten enthält, ausgelesen wird, **dadurch gekennzeichnet, dass**
die Integrität eines wiederhergestellten Elements, das dem Quellelement (ELEMENT_X_NV_MEM) entspricht, ermittelt wird, wobei dieses Element aus den übertragenen Daten (COPY_ELT_X_V_MEM), die gegebenenfalls durch andere Daten des Quellelements (ELEMENT_X_NV_MEM) als die übertragenen Daten vervollständigt wurden, wieder hergestellt wird, wobei die übertragenen Daten (COPY_ELT_X_V_MEM) nur einem Teil der Daten, die das Quellelement (ELEMENT_X_NV_MEM) bilden, entsprechen, und dadurch, dass bestimmt wird, dass die übertragenen Daten (COPY_ELT_X_V_MEM) mit den Quelldaten identisch sind, wenn die Ermittlung der Integrität einen Wert ergibt, der mit dem Integritätswert des Quellelements (PI_ELT_X) identisch ist.

2. Verfahren nach Anspruch 1, bei dem der Integritätswert (PI_ELT_X) des Elements, das die Quelldaten enthält, und der für das wiederhergestellte Element berechnete Integritätswert Kontrollwerte für eine CRC-Prüfung der Daten sind.

3. Verfahren nach Anspruch 1 oder 2, bei dem aus dem Quellspeicher (NV_MEM) ein Referenzwert (VR_NV_MEM), der sich von den zu übertragenden Daten unterscheidet, in den Zielspeicher (V_MEM) kopiert wird, wobei dieser Referenzwert einerseits im Quellspeicher (NV_MEM) vorgespeichert ist und andererseits in einer Kartenlese-Software zum Lesen der Chipkarte vorgespeichert ist und bei dem der übertragene Wert (VR_V_MRM) im Zielspeicher (V_MEM) mit dem in der Lesesoftware vorgespeicherten Wert verglichen wird, um zu ermitteln, ob die übertragenen Daten (COPY_ELT_X_V_MEM) mit den Quelldaten identisch sind.

4. Verfahren nach Anspruch 3, bei dem das Kopieren des vorgegebenen Werts während des Kopierens der Quelldaten ausgeführt wird.

## Claims

1. A method of comparing source data stored in a source memory (NV_MEM) of a smart card with transferred data (COPY_ELT_X_V_MEM) copied from the source memory (NV_MEM) into a "destination" memory (V_MEM) of the smart card, wherein an integrity value (PI ELT X) associated with a source element (ELEMENT_X_NV_MEM) such as a file containing the source data is read from the source memory (NV_MEM), **characterized in that** the integrity value is calculated for a reconstituted element corresponding to the source element (ELEMENT_X_NV_MEM), said element being reconstituted from the transferred data (COPY_ELT_X_V_MEM) plus, where appropriate, any data in the source element (ELEMENT_X_NV_MEM) other than the transferred data if the transferred data (COPY_ELT_X_V_MEM) corresponds only to a part of ther data constituting the source element (ELEMENT_X_NV_MEM), and **in that** it is decided that the transferred data (COPY_ELT_X_V_MEM) is identical to the source data when the integrity calculation gives a value that is identical to the integrity value of the source element (PI_ELT_X).

2. A method according to claim 1, wherein the integrity value (PI_ELT_X) of the element containing the source data and the integrity value calculated for the reconstituted element are cyclic redundancy check values for the data.

3. A method according to claim 1 or claim 2, wherein a reference value (VR_NV_MEM) distinct from the data for transfer is copied from the source memory (NV_MEM) to the destination memory (V_MEM), said reference value being firstly pre-stored in the source memory (NV_MEM) and secondly pre-stored in read software of the smart card, and wherein the transferred value (VR_V_MEM) in the destination memory (V_MEM) is compared with the value stored in the read software to determine whether the transferred data (COPY_ELT_X_V_MEM) is identical to the source data.

4. A method according to claim 3, wherein the reference value (VR_NV_MEM) is copied while copying the source data.
